# EUROPEAN PATENT SPECIFICATION

(11) **EP 0 573 206 B1**
(45) Date of publication and mention of the grant of the patent: **26.08.1998**
(21) Application number: 93304085.9
(22) Date of filing: 26.05.1993
(51) Int. Cl.: C08G 18/48, C08G 18/12

(54) **Moisture-cured polyurethane compositions and a method for preparing them by moisture curing of isocyanate-terminated prepolymers**
Feuchtigkeitsgehärtete Polyurethan-Zusammensetzungen und ein Verfahren zur ihrer Herstellung durch Feuchtigkeitshärtung von Isocyanatgruppen enthaltenden Prepolymeren
Compositions de polyuréthane durcissant à l'humidité et une méthode pour les préparer par durcissement des prépolymères ayant des groupes terminaux isocyanates

(30) Priority: 05.06.1992 US 893852
(43) Date of publication of application: 08.12.1993
(73) Proprietor: ARCO Chemical Technology, L.P., Greenville, Delaware 19807 (US)
(72) Inventor: Barksby, Nigel, Dunbar, West Virginia 25064 (US)
(74) Representative: Cropp, John Anthony David

(56) References cited:
- EP-A- 0 425 694
- WO-A-90/15835
- WO-A-91/04997
- WO-A-92/06139

## Description

The invention relates to moisture-cured polyurethane compositions and to a method for preparing them by moisture-curing an isocyanate-terminal prepolymer. The prepolymers are prepared by reacting a polyether polyol mixture with a polyisocyanate.

### BACKGROUND OF THE INVENTION:

Conventional polyether polyols useful for polyurethanes are typically prepared by polymerizing propylene oxide and/or ethylene oxide in the presence of a hydroxyl-containing initiator and a basic catalyst such as potassium hydroxide. The average hydroxyl functionality of the polyether polyol depends largely on the functionality of the hydroxyl-containing initiator. However, some of the propylene oxide used to make polyethers isomerizes under alkaline conditions to give allyl alcohol, which is propoxylated to give a monofunctional polyether ("monol") impurity. Thus, the actual hydroxyl functionality of polyether polyols is typically significantly lower than the nominal functionality, especially for high equivalent weight polyols, due to the presence of monol. The adverse impact of monol on polyurethane properties is well known (see, for example, U.S. Patent No. 3,485,861).

Polyether polyols having low monol contents and actual functionalities closer to the nominal functionalities can be prepared using modified base catalysts (U.S. Patent Nos. 4,687,851 and 5,010,117) or double metal cyanide compounds (U.S. Patent Nos. 3,829,505, 4,239,879, and 4,242,490). These "low-unsaturation" polyols give polyurethane products having improved physical properties. Improved elastomers (U.S. Patent Nos. 4,687,851, 4,239,879, and 4,242,490; Japanese Patent Application Kokai Nos. 2-263,818 and 2-263,819; Smith et al., Polyurethanes World Congress 1991, 313; Mascioli, Proceedings of the SPI, 32nd Annual Polyurethane Technical/Marketing Conference, Oct. 1989, 139), and sealants (U.S. Patent No. 4,985,491) have been reported. Reisch and Capone reported (Elastomerics, April 1991, pp. 18-23) improved elastomers and sealants based on polyether polyols made with double metal cyanide catalysts.

Mixtures of conventional polyether diols and triols are often proposed for use in polyurethanes (see U.S. Patent Nos. 3,391,101, 3,779,794, 3,422,054, and 4,816,509).

U.S. Patent No. 4,985,491 teaches improved polyurethane sealants prepared from low monol-containing triols or mixtures of triols and diols. The measured average hydroxyl functionality of these polyether polyol mixtures is typically greater than or equal to about 2.5. EP-A-0425694 discloses forming a moisture-curable polyurethane prepolymer from a mixture of equal amounts of a polyoxypropylene triol having an average molecular weight of 3000 and a total unsaturation degree of 0.04 meq/g and a polyoxypropylene diol having an average molecular weight of 2000 and a total unsaturation degree of 0.04 meq/g. The polyol mixture has an average hydroxyl functionality greater than 2.2.

In spite of the high level of activity and interest in low-unsaturation polyols, overall physical properties of the polyurethane products are still somewhat poorer than desirable. For example, elastomers having higher tear strength, tensile strength, and elongation are needed. Elastomers that have reduced stress at high elongations are especially needed for joint-sealing applications. Also needed is a better understanding of how polyol functionality influences polyurethane properties when low-monol polyether polyol mixtures are used.

### SUMMARY OF THE INVENTION:

The present invention provides moisture-cured polyurethane elastomers having a superior balance of physical properties; especially tensile strength and tear strength.

According to the invention, there is provided a moisture-cured polyurethane composition prepared from an isocyanate-terminated prepolymer comprising the reaction product of a polyisocyanate and a polyether polyol mixture which includes a polyether diol and a polyether polyol having 3 or more hydroxyl groups, has an average hydroxyl functionality within the range of 1.95 to 2.2 and has a polyether monol content less than 15 mole percent, and wherein the prepolymer is prepared from about one mole of polyisocyanate per mole of polyol hydroxyl group.

We have surprisingly found that these moisture-cured polyurethane products having an exceptionally good balance of physical properties. The polyurethanes exhibit high tear strength, tensile strength, and elongation compared with those made from conventional polyols or low-unsaturation polyol mixtures having higher functionality. The prepolymers of the invention also give polyurethane elastomers that have reduced stiffness at high elongations,

The invention includes polyurethane elastomers, sealants, adhesives, and coatings.

### BRIEF DESCRIPTION OF THE DRAWINGS:

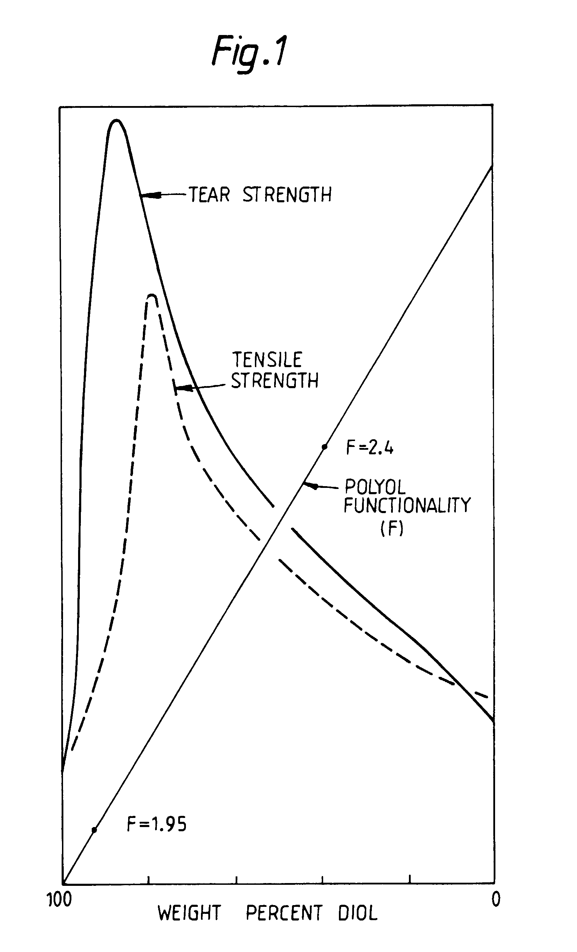

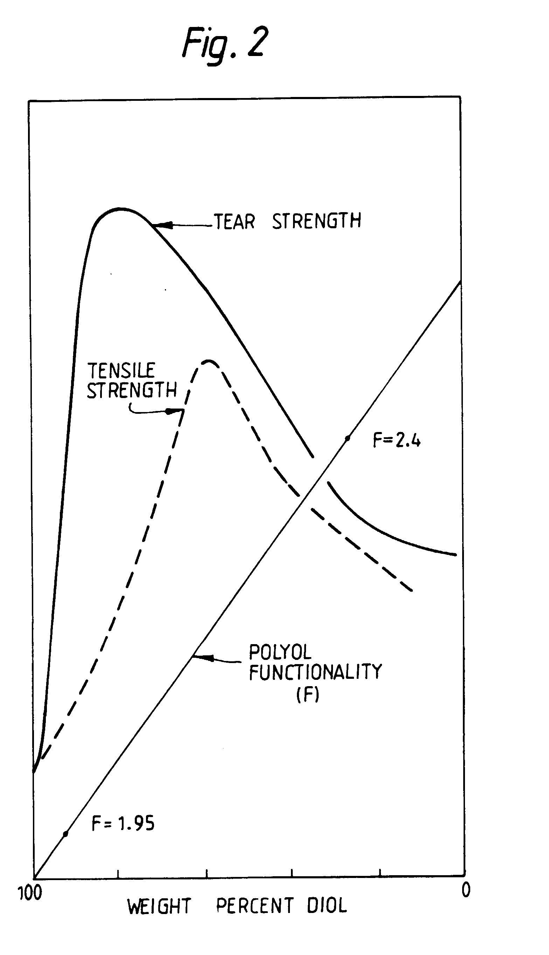

Figures 1 and 2 show tear strength and tensile strength of elastomeric polyurethanes as a function of weight percent diol in a diol/triol (Fig. 1) or diol/hexol (Fig. 2) system. The average hydroxyl functionality of the polyol mixture is also plotted against diol content.

### DETAILED DESCRIPTION OF THE INVENTION:

The isocyanate-terminated prepolymers employed in the moisture-cured polyurethanes of the invention are prepared by reacting a polyisocyanate and a polyether polyol mixture.

Polyisocyanates useful in the invention are those commonly known to those skilled in the art. These are aromatic and aliphatic organic compounds that have two or more free isocyanate (NCO) groups. Examples of suitable polyisocyanates include, but are not limited to, toluene diisocyanates (TDI), diphenylmethane diisocyanates (MDI), polymeric MDIs, cyclohexane diisocyanates (CHDI), isophorone diisocyanates, naphthalene diisocyanates, and the like, and mixtures thereof. The prepolymer is prepared from about one mole of polyisocyanate per mole of polyol hydroxyl group.

The polyether polyol mixture includes a polyether diol and a polyether polyol having 3 or more hydroxyl end groups. The polyether polyol mixture has a polyether monol content less than 15 mole percent, and an average hydroxyl functionality within the range of 1.95 to 2.2.

The polyether polyol mixture includes polyols made by any suitable method. The polyols can be produced by conventional base-catalyzed epoxide polymerization, double metal cyanide catalysis, or any other means known to those skilled in the art. Conventional polyols commonly have monol contents greater than 15 mole percent. Consequently, it is preferred to prepare the polyether polyols using double metal cyanide catalysts as, for example, is described in U.S. Patent No. 3,829,505. When double metal cyanide compounds are used as epoxide polymerization catalysts, polyether polyols--even high molecular weight polyols-having monoi contents less than 15 mole percent are easily prepared. Mixtures of polyols made by different methods can be used, but the monol content of the mixture must be less than 15 mole percent.

The polyether polyol mixture includes a polyether diol and a polyether polyol having 3 or more hydroxyl end groups (triol, tetrol, hexol, etc.). In one embodiment, the polyol is a triol ; in another embodiment, it is a hexol. Any number of additional polyols can be used. Generally, the major component of the polyol mixture will be a diol, and minor amounts of a triol, tetrol, hexol, or the like, or a mixture thereof, will be included.

Average hydroxyl functionality is found by measuring the amounts of monol, diol, triol, etc. in any polyol sample. The polyether polyol mixture used in the invention has an average hydroxyl functionality within the range of 1.95 to 2.20. Because the polyether polyols useful in the invention typically have low monol contents (and actual functionalities that are relatively close to the nominal functionalities), the polyether polyol mixture will usually contain mostly polyether diol to be within the specified functionality range.

Conventional triols often have average hydroxyl functionalities within the 1.9-2.4 range, but these are generally not suitable for the invention because they will have monol contents greater than about 15 mole percent. A conventional 6000 molecular weight EO-capped triol, for example, has a nominal functionality of 3.0, but might actually be composed of 30 mole percent monol and 70 mole percent triol, and have an average hydroxyl functionality of about 2.3. Polyether polyols useful in the invention will typically have much lower monol contents.

In one embodiment of the invention, the polyether polyol mixture has an equivalent weight of about 2000.

The prepolymers are prepared by combining, in any desired manner, the polyether polyol mixture and a polyisocyanate. The components are typically mixed together and heated to promote reaction of the polyol(s) and the polyisocyanate. The reaction temperature will commonly be within the range of about 30°C to about 150°C; a more preferred range is from about 60°C to about 100°C. The reaction is advantageously performed in a moisture-free atmosphere. An inert gas such as nitrogen, or argon can be used to blanket the reaction mixture. If desired, an inert solvent can be used during preparation of the prepolymer, although none is needed. A solvent may be preferred for some applications, such as moisture-cured coating formulations.

To form the polyurethanes of the invention, the prepolymers are moisture cured according to methods well known to those skilled in the art. Moisture curing simply involves exposure of the prepolymer to moisture in the air, often in an environment of controlled humidity.

A wide variety of polyurethane products, including elastomers, sealants, adhesives, and coatings may be obtained in accordance with the invention. The polyurethanes obtained from the prepolymers are especially useful for applications that require superior tensile and tear strength, and high elongation, e.g., joint-sealing applications. In accordance with one embodiment of the invention, moisture cured polyurethane compositions are obtainable having a tear strength greater than 87.5 x 10² Nm (50 lb/in) measured according to ASTM Method D-624. In accordance with another embodiment compositions are obtainable having a 200% modulus/100 % modulus ratio within the range of 1.20 to 1.35.

The following examples merely illustrate the invention. Those skilled in the art will recognize numerous variations that are within the scope of the claims.

### Polyether Polyols

The polyether polyols used are prepared by polymerizing propylene oxide in the presence of a hydroxyl initiator and a zinc hexacyanocobaltate catalyst as previously described (See U.S. Patent Nos. 3,278,459, 3,404,109, 3,829,505, and 3,941,849, for example).

Each of the all-PO polyols used--a 4000 MW diol, a 6000 MW triol, and a 12,000 MW hexol--has an equivalent weight of about 2000. The average hydroxyl functionalities are determined by liquid chromatography using 7:3 methanol/water containing about 1% of 0.025 M KH₂PO₄ buffer solution. The polyols and their measured functionalities are summarized in Table 1.

### Prepolymer Preparation

The polyol or polyol mixture and toluene diisocyanate (80/20) (1 mole of TDI per mole of polyol -OH) are charged into a 4-neck round-bottom flask. The stirred mixture is heated to 80°C, and is kept at 80°C until the free isocyanate content measured agrees with the theoretical value expected at complete hydroxyl conversion. The free NCO content is determined by reacting a prepolymer sample with excess standard di-n-butylamine/toluene solution, then back-titrating with standard aqueous HCl solution. For reaction times greater than 8 h, the mixture is allowed to cool overnight, and heating is resumed on the following day. Tables 2 and 3 indicate the relative amounts of the various polyols used to make each prepolymer.

### Moisture Curing of Prepolymers and Elastomer Property Testing

Prepolymer samples are degassed under full vacuum about 1,33 mbar (about 1 mm) and then poured into 3.175 mm (1/8")-thick polypropylene plaque molds. The products are cured at 23°C and 50% relative humidity. After demolding, the plaques are conditioned for 14 days at 23°C and 50% relative humidity prior to physical-property testing. The samples are tested for tensile strength, modulus, and elongation (ASTM Method D-412), tear strength (ASTM Method D-624), and indentation hardness (ASTM Method D-2240). Physical properties of the elastomers are summarized in Tables 2 and 3.

As shown in Table 2, optimum elastomer properties result when the diol/triol blend is mostly diol. The tear strength and tensile strength results from Table 2 are plotted in Figure 1. As shown in the figure, excellent properties result when the average hydroxyl functionality of the polyol mixture is within the range of about 1.9 to 2.4.

Table 3 summarizes elastomer properties from diol/hexol blends. Again, the best elastomers are obtained when the blend contains mostly diol. Figure 2 is a plot of the tensile strength and tear strength data from Table 3. Once again, the results are most favorable when the average hydroxyl functionality of the polyol mixture is within the range of about 1.9 to about 2.4. Note that properties begin to drop off more quickly when the amount of hexol is increased (compared with the diol/triol blend) because of its high functionality compared to the triol.

Elastomers made using the prepolymers of the invention exhibit reduced stress at high elongations. Commercial elastomers have modulus 200%/modulus 100% ratios of about 1.46, while those of the invention (Tables 2 and 3) have modulus 200%/modulus 100% ratios within the range of about 1.20 to 1.35. This unusual property is an important advantage for sealants and elastomers to be used in joint-sealing applications.

The preceding examples are meant only as illustrations; the true metes and bounds of the invention are defined by the following claims.

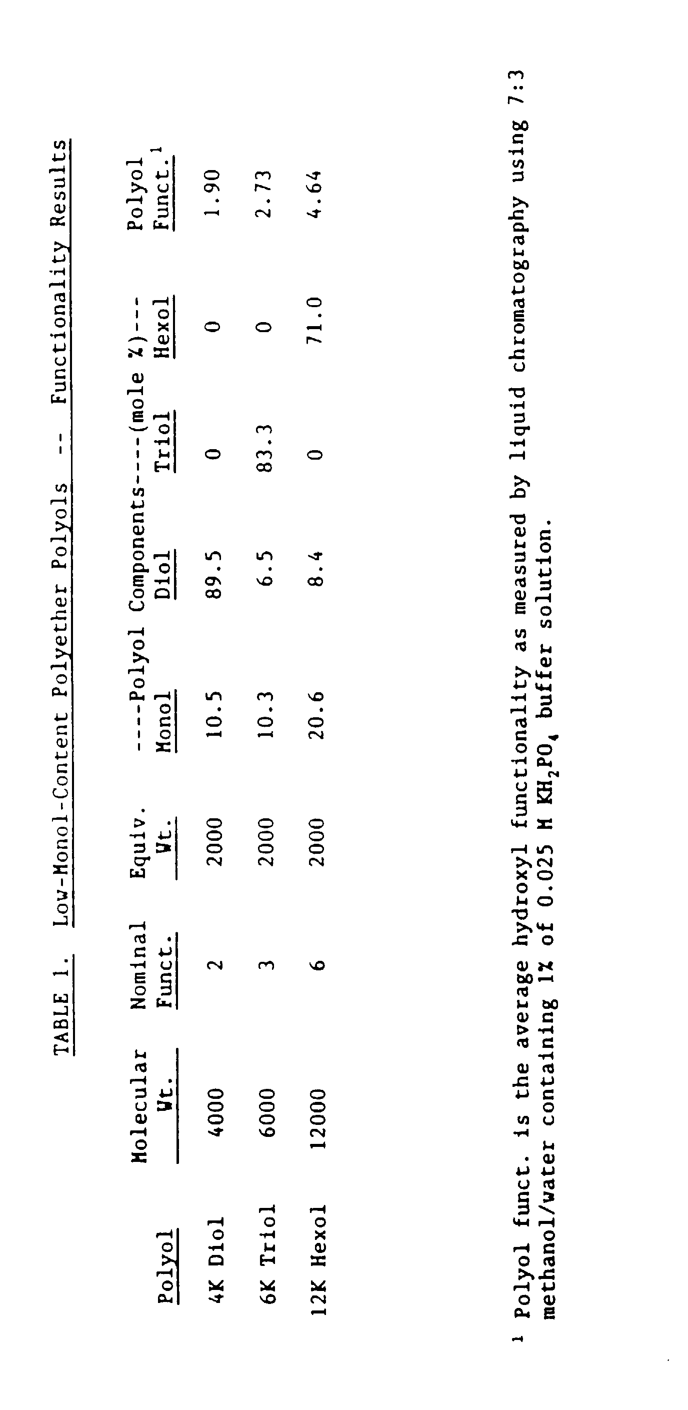

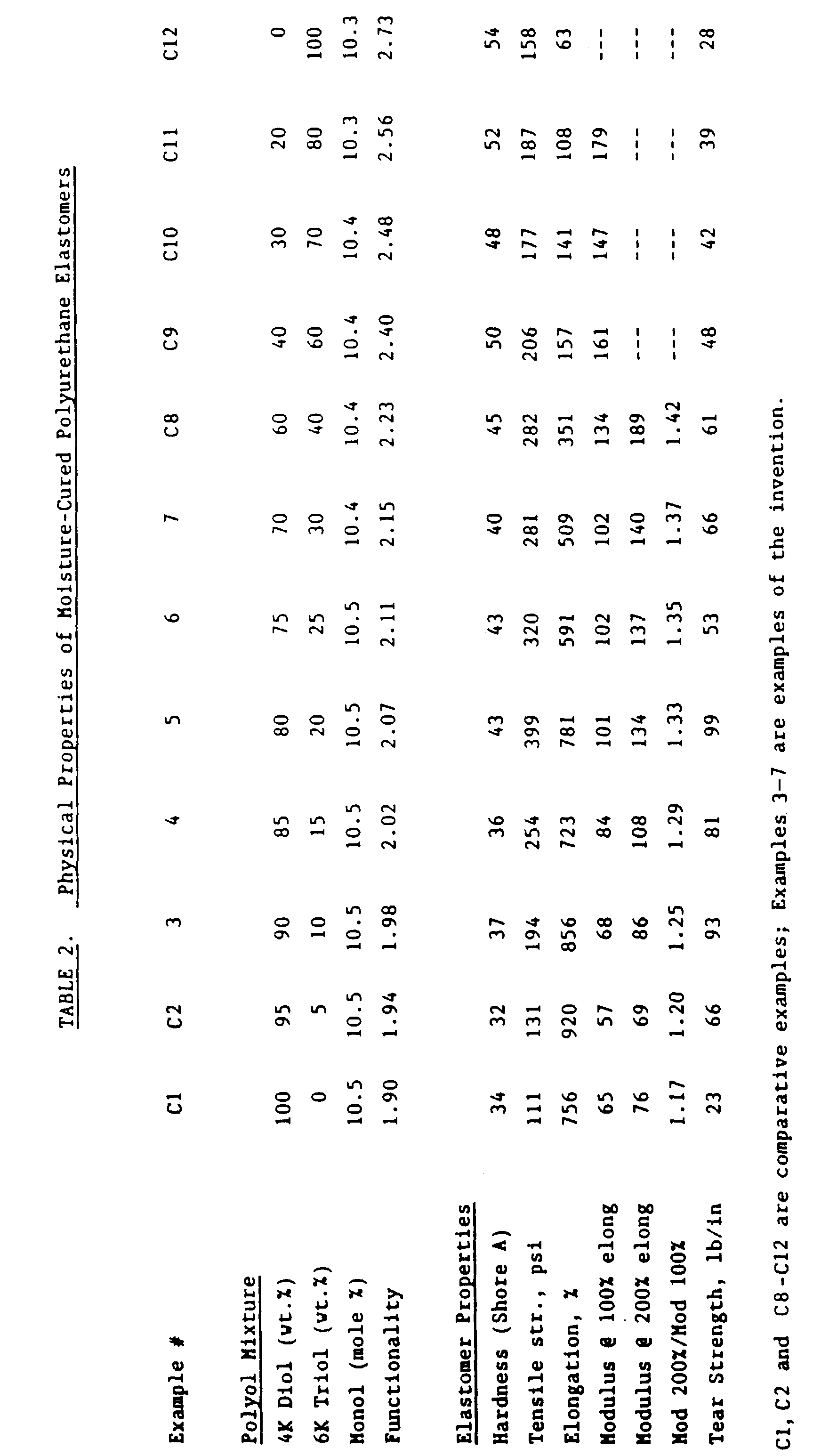

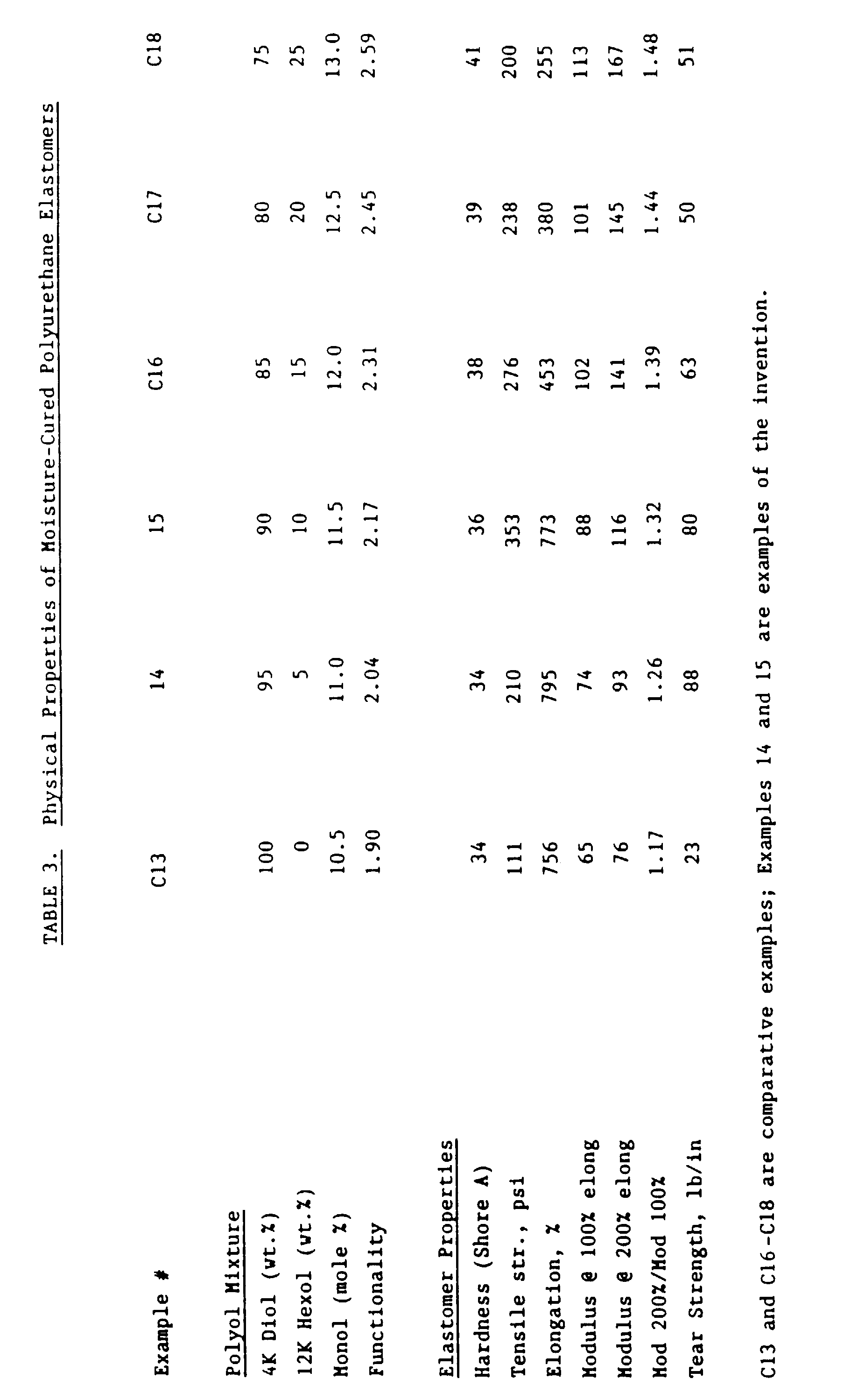

## Claims

1. A moisture-cured polyurethane composition prepared from an isocyanate-terminated prepolymer comprising the reaction product of a polyisocyanate and a polyether polyol mixture which includes a polyether diol and a polyether polyol having 3 or more hydroxyl groups, and has a polyether monol content less than 15 mole percent, and wherein the prepolymer is prepared from about one mole of polyisocyanate per mole of polyol hydroxyl group, characterised in that the polyether polyol mixture has an average hydroxyl functionality within the range of 1.95 to 2.2.

2. A composition as claimed in claim 1 characterised in that the polyisocyanate is selected from toluene diisocyanates, diphenylmethane diisocyanates, polymeric MDIs, cyclohexane diisocyanates, isophorone diisocyanates, naphthalene diisocyanates, and mixtures thereof.

3. A composition as claimed in claim 1 or claim characterised in that the polyether polyol mixture includes a polyether diol and a polyether triol.

4. A composition as claimed in claim 3 characterised in that the polyisocyanate is toluene diisocyanate.

5. A composition as claimed in claim 1 or claim 2 characterised in that the polyether polyol mixture includes a polyether diol and a polyether hexol.

6. A composition as claimed in any one of the preceding claims characterised in that the polyether polyol mixture has an equivalent weight of about 2000.

7. A composition as claimed in any one of the preceding claims having a tear strength greater than 87.5 x 10²N/m (50 lb./in) measured according to ASTM Method D-624.

8. A composition as claimed in any one of the preceding claims having a 200% modulus/100% modulus ratio within the range of 1.20 to 1.35.

9. A method of preparing a moisture-cured polyurethane composition as claimed in any one of claims 1 to 8, said method comprising:
(a) preparing the prepolymer by reacting the polyisocyanate with the polyether polyol mixture; and
(b) curing the prepolymer with atmospheric moisture to produce the moisture-cured polyurethane.

## Patentansprüche

1. Feuchtigkeitsgehärtete, aus einem mit Isocyanat endenden Präpolymer hergestellte Polyurethanzusammensetzung, die das Reaktionsprodukt eines Polyisocyanats und eines Polyetherpolyol-Gemisches umfaßt, das ein Polyetherdiol und ein Polyetherpolyol mit 3 oder mehr Hydroxygruppen beinhaltet und einen Polyethermonool-Gehalt von unter etwa 15 Mol-% aufweist und worin das Präpolymer hergestellt wird aus etwa 1 Mol Polyisocyanat pro Mol Polyol-Hydroxygruppe, dadurch gekennzeichnet, daß das Polyetherpolyol-Gemisch eine durchschnittliche Hydroxylfunktionalität im Bereich von 1,95 bis 2,2 aufweist.

2. Zusammensetzung nach Anspruch 1, dadurch gekennzeichnet, daß das Polyisocyanat ausgewählt ist unter Toluoldiisocyanaten, Diphenylmethandiisocyanaten, polymeren MDI's, Cyclohexandiisocyanaten, Isophorondiisocyanaten, Naphthalindiisocyanaten und Gemischen davon.

3. Zusammensetzung nach Anspruch 1 oder Anspruch 2, dadurch gekennzeichnet, daß das Polyetherpolyol-Gemisch ein Polyetherdiol und ein Polyethertriol enthält.

4. Zusammensetzung nach Anspruch 3, dadurch gekennzeichnet, daß das Polyisocyanat Toluoldiisocyanat ist.

5. Zusammensetzung nach Anspruch 1 oder Anspruch 2, dadurch gekennzeichnet, daß das Polyetherpolyol-Gemisch ein Polyetherdiol und ein Polyetherhexol enthält.

6. Zusammensetzung nach einem der vorhergehenden Ansprüche, dadurch gekennzeichnet, daß das Polyetherpolyol-Gemisch ein Äquivalentgewicht von etwa 2000 aufweist.

7. Zusammensetzung nach einem der vorhergehenden Ansprüche, die eine Zerreißfestigkeit von über 87,5 x 10² N/m (50 lb/in), gemessen gemäß dem ASTM-Verfahren D-624, aufweist.

8. Zusammensetzung nach einem der vorhergehenden Ansprüche, die ein Verhältnis 200 % Modul / 100 % Modul im Bereich von 1,20 bis 1,35 aufweist.

9. Verfahren zur Herstellung einer feuchtigkeitsgehärteten Polyurethanzusammensetzung nach einem der Ansprüche 1 bis 8, welches die folgenden Schritte umfaßt:
(a) Herstellen des Pärpolymers durch Umsetzen des Polyisocyanats mit dem Polyetherpolyol-Gemisch, und
(b) Härten des Präpolymers unter Atmosphärenfeuchtigkeit, wobei das feuchtigkeitsgehärtete Polyurethan hergestellt wird.

## Revendications

1. Composition de polyuréthane durcie à l'humidité préparée à partir d'un prépolymère à terminaisons isocyanate comprenant le produit réactionnel d'un polyisocyanate et d'un mélange de polyéther polyols qui comprend un polyéther diol et un polyéther polyol ayant 3 groupes hydroxy ou plus, et a une teneur en polyéther monol inférieure à 15% en moles, et où le prépolymère est préparé à partir d'environ une mole de polyisocyanate par mole de groupe hydroxy des polyols, caractérisée en ce que le mélange de polyéther polyols a une fonctionnalité hydroxy moyenne comprise dans la gamme de 1,95 à 2,2.

2. Composition suivant la revendication 1, caractérisée en ce que le polyisocyanate est choisi parmi les toluène diisocyanates (TDI), les diphénylméthane diisocyanates (MDI) les MDI polymères, les cyclohexane diisocyanates (CHDI), les isophorone diisocyanates, les naphtalène diisocyanates, et leurs mélanges.

3. Composition suivant les revendications 1 ou 2, caractérisée en ce que le mélange de polyéther polyols comprend un polyéther diol et un polyéther triol.

4. Composition suivant la revendication 3, caractérisée en ce que le polyisocyanate est un toluène diisocyanate.

5. Composition suivant les revendications 1 ou 2, caractérisée en ce que le mélange de polyéther polyols comprend un polyéther diol et un polyéther hexol.

6. Composition suivant l'une quelconque des revendications précédentes, caractérisée en ce que le mélange de polyéther polyols a un poids équivalent d'environ 2000.

7. Composition suivant l'une quelconque des revendications précédentes, ayant une résistance à la déchirure supérieure à 87,5x10² N/m (50 lb/in) mesurée selon la norme ASTM, procédure D-624.

8. Composition suivant l'une quelconque des revendications précédentes, ayant un rapport de module à 200%/module à 100% compris dans la gamme de 1,20 à 1,35.

9. Procédé de préparation d'une composition de polyuréthane durcie à l'humidité suivant l'une quelconque des revendications 1 à 8, ce procédé comprenant :
(a) la préparation du prépolymère par réaction du polyisocyanate avec le mélange de polyéther polyols; et
(b) le durcissement du prépolymère à l'humidité atmosphérique pour produire le polyuréthane durci à l'humidité.
